# EUROPEAN PATENT APPLICATION

(11) **EP 2 597 449 A2**
(43) Date of publication of application: **29.05.2013**
(21) Application number: 12193475.6
(22) Date of filing: 20.11.2012
(51) Int. Cl.: G01M 5/00

(54) **METHOD FOR PROGNOSING A HEALTH PROBLEM OF AN APPARATUS**

(30) Priority: 23.11.2011 US 201113303247
(71) Applicant: GE Aviation Systems LLC, Grand Rapids, MI 49512-1991 (US)
(72) Inventor: Wilson, Jonathan Paul, Cincinnati, OH Ohio 45215 (US)
(74) Representative: Williams, Andrew Richard

(57) **Abstract**

A method of prognosing a health problem of an electrical, mechanical or electromechanical apparatus such as a jet engine (12) based on radiation emitted by the apparatus (12) where the method includes establishing a profile for the apparatus (12) while the apparatus (12) is operating, saving such a profile for the apparatus (12), forming a set of historical profiles for a number of apparatuses (12), and identifying at least one anomaly in the set of historical profiles that is indicative of a future failure.

## Description

### BACKGROUND OF THE INVENTION

Electrical, mechanical, or electro-mechanical apparatuses may be used in a variety of products including vehicles, appliances, etc. A problem with current instrumentation on such apparatuses is that there are limitations to the number of sensors that may be physically mounted and instrumented for use in monitoring or analyzing the health of the apparatus. Additional complexity such as weight, cabling, connectors, mounting hardware, etc. may limit the number of sensors that may collect data regarding the apparatus. Further, correlation of the data from the number of sensors may be cumbersome.

### BRIEF DESCRIPTION OF THE INVENTION

In one embodiment, a method of prognosing a health problem in an electrical, mechanical or electro-mechanical apparatus based on radiation emitted by the apparatus, includes a) at least partially enveloping the apparatus in an antenna assembly, b) establishing a profile for the apparatus by detecting the radiation received from the antenna assembly while the apparatus is operating, c) saving the profile for the apparatus, d) repeating a-c across multiple apparatuses at multiple times to form a set of historical profiles for the multiple apparatuses, and e) identifying at least one anomaly in the set of historical profiles that is indicative of a future failure.

### BRIEF DESCRIPTION OF THE DRAWINGS

In the drawings:
Figure 1 is a schematic illustration of an aircraft having a variety of apparatuses including jet engines.
Figure 2 is a schematic illustration of a diagnostic system according to an embodiment of the invention including a jet engine of Figure 1.
Figure 3 is a schematic illustration of a layered diagnostic tool according to an embodiment of the invention.
Figure 4 is a schematic illustration of a layered diagnostic tool according to another embodiment of the invention.
Figure 5 is a schematic illustration of a portion of the diagnostic system of Figure 2 and exemplary databases to aid in the analysis of the diagnostic information.

### DESCRIPTION OF EMBODIMENTS OF THE INVENTION

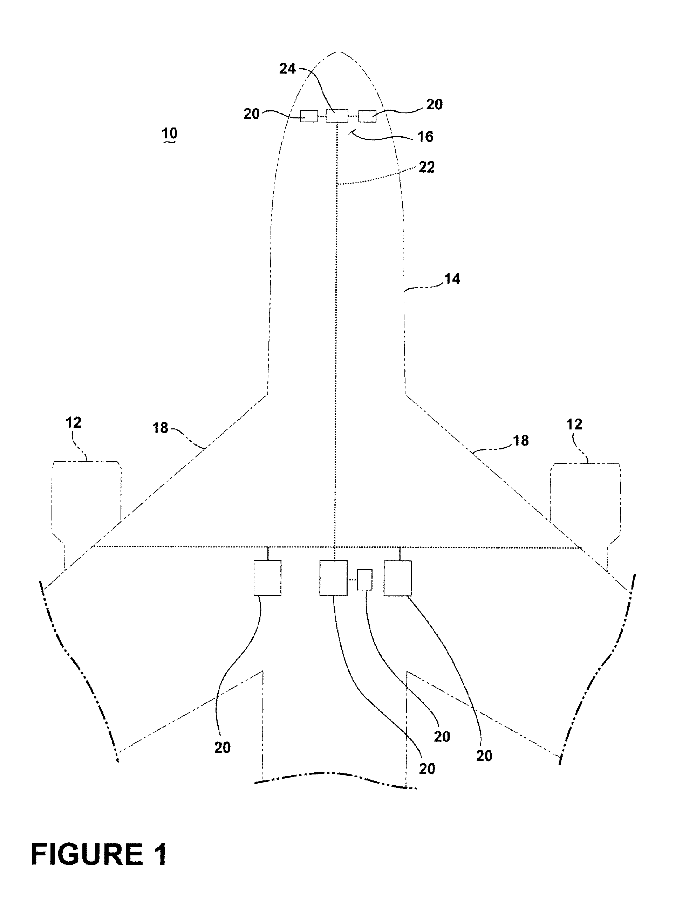

A brief overview of a specific apparatus in a specific setting will provide useful. Figure 1 schematically illustrates a portion of an aircraft 10 providing an environment for an embodiment of the present disclosure. One or more propulsion or jet engines 12 coupled to a fuselage 14, a cockpit 16 positioned in the fuselage 14, and wing assemblies 18 extending outward from the fuselage 14 may be included in the aircraft 10. Further, a plurality of systems 20 that enable proper operation of the aircraft 10 may be included and may be operably coupled through a communication network 22 to a flight control computer 24. It may be desired during the life cycle of an apparatus, such as a jet engine 12, to determine information regarding the jet engine 12 including by way of non-limiting example a health of the jet engine 12.

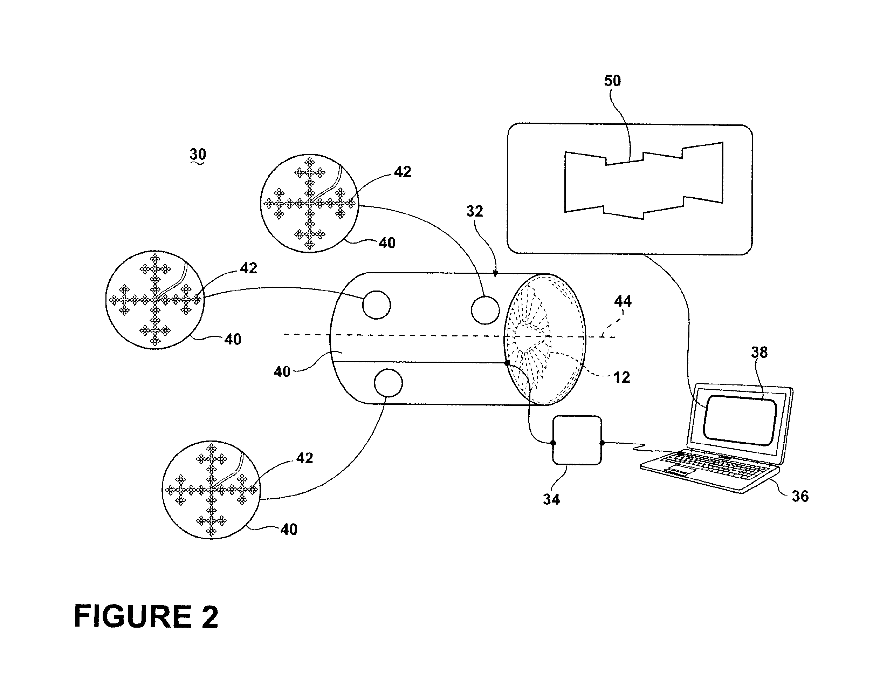

Figure 2 illustrates a diagnostic system 30 suitable for determining the health, both diagnosing and prognosing, of any apparatus, including by way of non-limiting example a jet engine 12, which may have one or more sources of radiation. The jet engine 12 may be a source of portions of full-spectrum radiation, especially sources from electromechanical interference generated by rotating or reciprocating component in the apparatus, which may create among other things electromagnetic radiation. The system 30 has a diagnostic tool 32, a signal module 34, a processor 36, and a display 38 according to an embodiment of the invention. The remainder of the description will focus on the specific apparatus being one of the jet engines 12; however, it will be understood that the inventive concepts may be applied to any suitable electrical, mechanical or electro-mechanical apparatus, which may be used in any corresponding environment. The diagnostic system 30 is illustrated merely for exemplary purposes and may represent a typical system for a rotating apparatus such as a jet engine 12. It will be understood that the configuration of the diagnostic system 30 may be modified for use with alternative apparatuses.

The diagnostic tool 32 may include a diagnostic blanket or wrapper 40, which may be wrapped about the jet engine 12 and which has one or more sensors for sensing health data of the jet engine 12. It is contemplated that the wrapper 40 may include a sheet, which may at least partially envelope the apparatus and that the sensors may include an antenna assembly 42, which may include one or more antenna to receive user selected portions of the full spectrum radiation from the apparatus. The sheet of the wrapper 40 may be flexible, rigid, or a combination of flexible and rigid. The antenna assembly 42 may be located on or included in the wrapper 40. The shape of the wrapper 40 may define a cylinder with a centerline 44 along which the jet engine 12 may be inserted. In the illustrated embodiment the wrapper 40 is cylindrically shaped such that it may circumscribe the jet engine 12 allowing circumferential zones to have similar antenna assemblies 42 to identify similar or dissimilar circumferential radiation areas. It is contemplated that the wrapper 40 may alternatively fully envelope the jet engine 12 and that the wrapper 40 may be configured in a shape defining an interior sized to receive the jet engine 12. While illustrated as a cylinder for convenience of description, the wrapper may be configured into a variety of different shapes. The wrapper may follow the contours of the jet engine and all or part of the wrapper may lie in contact with the jet engine.

While the antenna assembly 42 has been illustrated in a cylinder configuration it may be understood that this configuration may be impractical for some applications due to a variety of mechanical obstructions. Thus, it is contemplated that the antenna assembly 42 may be broken up into identifiable zones and that such zones may provide equivalent results. Regardless of the number of zones, it will be understood that each of these zones may be the same radial distance from a center line 44 of the jet engine 12. In cases where this is also impractical, the signal module 34 and/or processor 36 may correct for any signal strength losses due to the distance variation.

The antenna assembly 42 may be configured to output at least one emission signal indicative of at least some portion of a full spectrum radiation that may be emitted by the jet engine 12 during operation. The antenna assembly 42 is only shown on a portion of the wrapper 40 for clarity purposes and may take on any geometric shape based on the requirements of the desired radiation to be received. It is contemplated that the antenna assembly 42 may be designed and tuned to receive a signal having a frequency emitted by the jet engine 12. For example, the antenna assembly 42 may be designed and tuned to the same frequency as a known emission source in the jet engine 12.

It is also contemplated that the antenna assembly 42 may be configured to receive multiple frequencies and that the antenna assembly 42 may be designed to receive multiple signals of different frequencies emitted by the jet engine 12 with the ability to selectively tune to the desired frequency or frequency bandwidth through use of the signal module 34. It is contemplated that the antenna assembly 42 may include a fractal antenna. Such fractal antenna assemblies 42 may be very compact and may be considered multiband or wideband such that they may be configured to receive multiple frequencies in desired portions of the full radiation spectrum including electromagnetic radiation. The antenna assembly 42 may include multiple fractal antenna assemblies that are matched in both location on the wrapper 40 and frequency to a known emission source from the jet engine 12.

Regardless of the type of antenna assembly 42 it is contemplated that the antenna assembly 42 may include an antenna array of multiple antenna assemblies 42, which may be configured in a variety of ways or combination of ways. For example, each of the antennas being configured to receive one or more frequencies; they may be configured to receive the same, similar or different frequencies; the antennas may be located at different locations about the wrapper, such as adjacent to a user selected portion of the full spectrum radiation source that emits at a frequency that corresponds to the one or more frequencies the antenna is configured to receive.

Regardless of the type of antenna assembly 42, the antenna may be operably coupled to the signal module 34 and may output at least one emission signal indicative of at least some portion of full-spectrum radiation emitted by the jet engine 12 to the signal module 34. The signal module 34 may be configured to provide specific filtering of the emission signal sent from the antenna assembly 42. The signal module 34 may be configured to provide specific filtering to station specific or system zone specific input signals of the antenna assembly 42. The signal module 34 may include any suitable module for providing filtering and tailored accuracy for the sought after frequencies. It is contemplated that such a signal module 34 may be capable of programing filter cutoff or notch frequencies. The signal module 34 may also include a memory device (not shown) for storing both the filtered and unfiltered emission signals. The processor 36 may receive the emission signal from such a memory device. The processor 36 may be configured to receive the emission signal and convert the emission signal into a human readable form. The processor 36 may be operably coupled to the display 38, which may be configured for displaying the human readable form. Although the processor 36 and the display 38 have been illustrated as being included in a laptop computer, any suitable processor 36 and display 38 may be used and the processor 36 and display 38 may be in physically separate apparatuses. It is contemplated that the display 38 may be configured to display the human readable form of the emission signal. Such a human readable form of the emission signal 50 is schematically illustrated in Figure 2 and may take any suitable form. The display 38 may be capable of real time display and data storage although this may not be required for system operation, such real time data processing would aid in operator notification of anomalies through the graphical representation of the data. This may be especially important during a development stage for the jet engine 12.

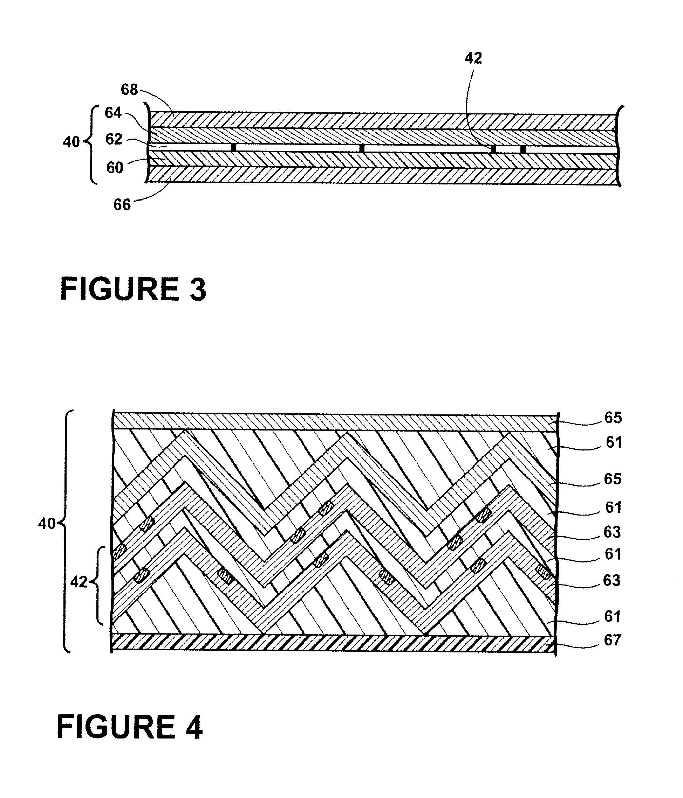

As illustrated in Figure 3, the wrapper 40 may be formed of multiple layers. For example, the wrapper 40 may include a laminate layer 60 such as polyester film. A flexible printing process may be used to print the antenna assembly 42 on such a laminate layer 60. In this manner, the wrapper 40 may include a multi-layer sheet, with the antenna assembly 42 provided on a layer to define an antenna layer 62. Antenna designs on the antenna layer 62 may be easily updated or changed based on the physical size of the intended apparatus and desired bandwidth. Depending on the application, any antenna or combination of antenna assemblies 42 may easily be adapted to the laminate layer 60 of the wrapper 40, tested, and applied. Additional laminates may be added to the wrapper 40 to create shielding from unwanted external signals, insulate from extreme temperatures, and to create audible frequency sound barriers. By way of non-limiting example, an electrical shielding layer 64 may be included adjacent the antenna layer 62. By way of additional non-limiting example, a first protective layer 66 may be included adjacent one of the antenna layer 62 and the electrical shielding layer 64. Further a second protective layer 68 may be included adjacent the other of the antenna layer 62 and the electrical shielding layer 64. It is contemplated that the first and second protective layers 66 and 68 may include a polyester film and that the electrical shielding layer 64 may include a conductive film or an aluminum sheet.

Figure 4 illustrates an alternative wrapper 40 for creating an alternative diagnostic tool. The illustrated alternative wrapper 40 includes a corrugated formation as well as an alternative antenna assembly 42. More specifically, not only are polyester film layers 61, electrical shielding layers 65, and an insulator layer 67 included to make the multi-layer wrapper 40, the antenna assembly 42 also includes multiple layers. More specifically, the antenna assembly 42 is illustrated as being formed by multiple antenna layers 63 spaced from each other by a polyester film layer 61. Such an antenna assembly 42 may be thought of as a piezo antenna assembly, which may be capacitive in design and may detect radiation at lower frequencies from the inductive designs described above. For the purpose of this description, the antenna assembly 42 may be either inductive or capacitive and are not limited to any geometry such that they may vary from traditional antennas to fractal designs.

Regardless of whether the antenna assembly 42 is an inductive or capacitive design; generally, during operation, the diagnostic tool 32 of the diagnostic system 30 may receive electro-mechanical emissions from the jet engine 12. Such emissions may be filtered or otherwise conditioned by the signal module 34 and may be recorded or displayed. For example, the location dependent frequency information may be displayed in a human readable form including the statistical mean, minimum, maximum and standard deviation of the sampled data. The emission signals may be sent to the processor 36 for evaluation and comparison at one point in the life of the jet engine or throughout the life of the jet engine 12. It is contemplated that statistical processing of the data may be done either on the processor 36 or on another processor. Such processing may permit engine-to-engine, fleet-to-fleet, and shop-to-shop trending, diagnostic, and prognostic applications to be applied. It is contemplated that such post processing software and the conversion of the emission signal into a human readable form and the display of same may be expandable with learning.

Examples of when the diagnostic system may be used include, for example, during production to establish a baseline or blueprint for at least a portion of a full spectrum radiation profile of each jet engine 12. The diagnostic system 30 may also be used to establish a checkup radiation profile at one or more later times during the life cycle of the jet engines 12. The baseline and checkup profiles may be compared to each other in a variety of ways for a variety of diagnostic and prognostic benefits.

It is also contemplated that the portions of the diagnostic system 30 may be integral to the jet engine 12 and may be plugged into by the remainder of the diagnostic system 30 for periodic inspections. Further, an in service version of the diagnostic system 30 may be provided and such an in service version may compare real time profiles and transmit fault reports through a wireless system (not shown) so that a maintainer of the aircraft 10 may be notified to the changing trends before damage to the jet engine 12 worsens.

Thus, according to one embodiment of the invention, the above described diagnostic system 30 may be used to implement a method of diagnosing manufacturing variances in such jet engines 12. Such a method may include an antenna assembly 42 in the form of an antenna array. An embodiment of such a method may include a) at least partially enveloping the jet engine 12 in the antenna assembly 42 after manufacture and prior to the jet engine 12 being put into service, b) establishing a baseline profile for the jet engine 12 by detecting the radiation received from the antenna assembly 42 while the jet engine 12 is operating, c) saving the baseline profile for the jet engine 12, d) repeating a-c for multiple jet engines 12 to form a set of baseline profiles for the multiple jet engines 12, and e) comparing the set of baseline profiles to determine a difference indicative of a variance in the manufacturing of the jet engines 12. A beneficial effect of the embodiment is that anomalies or differences in the jet engines 12 may be determined based on the differences.

It is contemplated that operating the jet engine 12 may include operating the jet engine 12 according to a test protocol. It is contemplated that multiple jet engines 12 may share at least one common component. The multiple jet engines 12 may even be the same type of jet engine. Comparing the set of baseline profiles may include comparing at least a subset of the baseline profiles. It is contemplated that comparing the set of baseline profiles may include comparing all of the baseline profiles. At least one identified difference may be compared to a reference value indicative of a manufacturing variance. It is contemplated that such a manufacturing variance may be indicative of a change in the manufacturing process or a manufacturing flaw.

In this manner, the diagnostic system 30 may address manufacturing variation based on comparing the baseline profiles across multiple jet engines 12. Changes or trends in the compared baseline profiles may be used in finding production anomalies affecting the jet engine during testing. Trends leading up to a rejected system being tested may indicate production issues. Comparing data leading up to a rejected system being tested may isolate the root cause for the change.

The above described diagnostic system 30 may also be used to implement a method of diagnosing a health of the jet engine 12. Such a method may include an antenna assembly 42 in the form of an antenna array. An embodiment of such a method may include at least partially enveloping the jet engine 12 in the antenna assembly 42, establishing a baseline profile by detecting the radiation received from the antenna assembly 42 at a first time and recording the baseline profile, establishing a checkup profile by detecting the radiation received from the antenna assembly at a second time, subsequent to the first time, and comparing the checkup profile to the baseline profile to determine a difference indicative of the health of the jet engine 12. The baseline profile may be established during a known healthy state of the jet engine 12. By way of non-limiting example, the known healthy state may include a completion of the manufacturing of the jet engine 12.

It is contemplated that the checkup profile may be established sometime later. This may include, by way of non-limiting examples, at least at one of an unhealthy state of operation of the jet engine 12, at regular intervals, and as part of a regular maintenance schedule. The comparing of the checkup profile to the baseline profile may include identifying differences in the radiation between the checkup and baseline profiles. It is contemplated that the identified differences may be compared to reference values indicative of a fault of the jet engine 12.

By way of non-limiting example, it may be assumed that a jet engine 12 has been sent to an overhaul shop after 7000 cycles of use. Normal shop procedures dictates that engine be torn down, inspected for worn or damaged parts, and that those parts are to be replaced, and the engine reassembled. As part of a final quality check and before the engine is returned to service, a test routine may be run that cycles the engine over the same test procedure that was originally run during the engine production run. Ideally, the comparisons of the original baseline profile of the engine compared to that of the checkup profile would be identical. If these do not match, there is an indication that something has changed from the original engine to the serviced engine. At this point, several courses of action could take place including comparing the checkup profile with previous fleet wide statistical values to see if the jet engine is within statistical limits, comparing the checkup profile with other engines with similar signatures, and comparing the maintenance procedures and/or results of jet engines that did not show significant changes from the baseline profile.

The above described embodiments may also be used to implement a method of prognosing a health problem in a jet engine 12. Such a method may include an antenna assembly 42 in the form of an antenna array. An embodiment of such a method may include a) at least partially enveloping the jet engine 12 in the antenna assembly 42, b) establishing a profile for the jet engine 12 by detecting the radiation received from the antenna assembly while the jet engine 12 is operating, c) saving the profile for the jet engine 12, d) repeating a-c across multiple jet engines 12 at multiple times to form a set of historical profiles for the multiple jet engines 12, and e) identifying at least one anomaly in the set of historical profiles that is indicative of a future failure. It is contemplated that establishing a profile may be limited to establishing a user defined portion of the full spectrum radiation. By way of non-limiting example an electromagnetic profile for the jet engine 12 may be established.

It is contemplated that multiple jet engines 12 share at least one common component. The multiple jet engines 12 may even be the same type of jet engine 12. It is also contemplated that a failure may be identified in the jet engine 12 and that the failure may be associated with the identified anomaly. The identified failure may be used to identify the associated anomaly. The method may also include analyzing the historical profiles (baseline and checkup profiles) of each of the other jet engines 12 for the anomaly. When the anomaly is detected in the historical profile, an alert of a potential failure may be sent out. The profiles may include baseline profiles that are recorded upon completion of the manufacturing for the jet engine 12 and before the jet engine 12 is put into service. The profiles include checkup profiles that are recorded after the corresponding baseline profile.

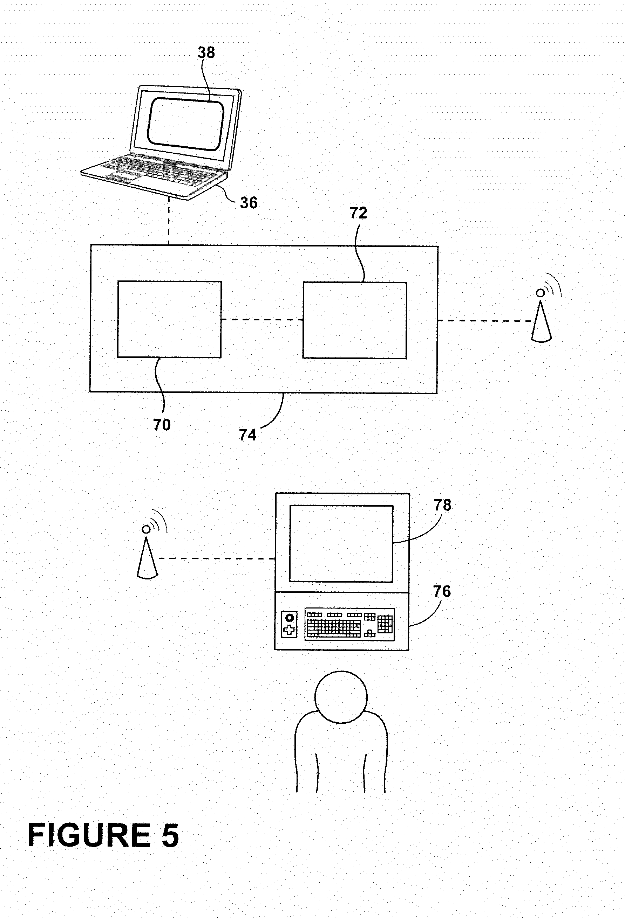

It is contemplated that the profiles may be stored in a computer searchable storage media where they are accessible and may be analyzed in a variety of ways for health diagnostics and prognostics purposes. By way of non-limiting example, Figure 5 illustrates that the profiles (baseline, checkup, etc.) may be stored in a profile database 70, which may be computer searchable. A maintenance database 72 may be operably coupled with the profile database 70 and may include additional data or information related to the jet engines, their maintenance, their service usage, etc. The data in the maintenance database 72 may be linked to the profiles in the profile database 70 such that information about a profile may be linked with information related to the jet engine that created the profile. The linking of the information in the profile database 70 and the maintenance database 72 may allow for inferences to be drawn between repairs, service usage of the jet engine, and other flight information related to the jet engine and changes in the profiles.

It will be understood that the profile database 70 and the maintenance database 72 may be any suitable type of databases, including a single database having multiple sets of data, multiple discrete databases linked together, or even a simple table of data. Regardless of the types of databases the profile database 70 and the maintenance database 72 may be provided on storage medium on a computer (not shown) or may be provided on a computer readable medium, such as a database server. It is contemplated that the profile database 70 and maintenance database 72 may be provided on the same computer or database server (shown schematically as 74). Alternatively, the profile database 70 and the maintenance database 72 may be located on separate computers or separate database servers.

The information in the profile database 70 and maintenance database 72 may be analyzed in a variety of ways for health diagnostics and prognostics purposes. In the case where the profile database 70 and maintenance database 72 are stored on a computer, a processor on the computer itself may be used for such diagnostic and prognostic purposes and may communicate the results of the analysis via a display or may transmit the results to a local or remote user. Alternatively, a separate computer may access the profile database 70 and maintenance database 72. By way of non-limiting example, the processor 36 is illustrated as being operably coupled to the profile database 70 and maintenance database 72 and may analyze the data therein and communicate the results of such analysis on the display 38. Further, a remote computer having a processor 76 and a display 78 may be operably coupled to the profile database 70 and maintenance database 72 and may analyze the data therein and communicate the results of such analysis to a remote user. It will be understood that the computers may access the profile database 70 and maintenance database 72 via a communication network or computer network coupling the profile database 70 and maintenance database 72 with the analyzing computer. By way of non-limiting example, such a computer network may be a local area network or a larger network such as the internet. It is also contemplated that such a coupling may be made wirelessly or via a wired connection.

During analysis of the data in the profile database 70 and maintenance database 72, the data may be filtered in any suitable manner including on an engine-by-engine basis, fleet-by-fleet basis, etc. An analysis may be done to make comparisons including comparisons between production models, comparisons between data from systems in service to original production data, and comparisons between systems in service to identify potential future failures. Such comparisons may include by way of non-limiting examples, fleet wide comparisons, cycle count comparisons, and pre and post maintenance comparisons. A beneficial effect is that information from the diagnostic system related to the health of the entire jet engine may be compared in a variety of ways and may be correlated with a variety of other information related to the engine such that various analyses may take place.

While the above embodiments are described with respect to the antenna assembly including an antenna array, it will be understood that a single or multiple antenna assembly may be used. It will also be understood that the antenna assembly may have inductive and/or capacitive properties. Further, detecting any portion of the full-spectrum radiation may include receiving the portion of the full-spectrum radiation from a multi-frequency antenna forming the antenna assembly 42. Further, by way of non-limiting example, the multi-frequency antenna may include a fractal antenna. It is contemplated that in all of the above described methods that the jet engine 12 may be fully enveloped in the antenna assembly 42.

Further, the antenna assembly 42 may be designed and tuned to at least some portion of the full spectrum frequencies emitted by the jet engine 12. It is contemplated that the antenna assembly may be selectively tuned for each portion of the jet engine 12. The antenna assembly may be tuned in a variety of ways including that an antenna configured to receive the known frequencies may be selected. Tuning the antenna assembly may also include locating a selected antenna adjacent the jet engine 12 where the known frequency is emitted.

While the above described embodiments have focused on the diagnostic system 30 and its uses with respect to a jet engine 12, it will be understood that the above described diagnostic system 30 may be configured to diagnose any electrical, mechanical, or electro-mechanical apparatus. In such cases, the size and shape of the wrapper may be easily adapted to the apparatus being tested or monitored. For example, in larger apparatuses some frequencies may tend to be lower and the corresponding antennas 42 may be larger. The wrapper may be easily adapted to irregular and/or asymmetric systems. Further, for apparatuses that are moving fluids such as internal combustion engines, turbo-machinery etc., unless controlled environmental conditions may be maintained in a production test for systems affected by pressure and temperature, it may be understood that the data collected for that apparatus may be corrected for pressure and temperature where applicable. For systems that are immune from pressure and temperature variation such as a mechanical apparatus not moving a fluid, data correction for pressure and temperature variations may not be applied.

The above described embodiments provide a variety of benefits including a reduction in the time and effort needed to validate the health of an apparatus, which in turn may reduce on-going maintenance costs. The diagnostic system 30 may be specifically tailored for known physical relationships of the apparatus, and may be substituted for an otherwise overwhelming, cumbersome, and massive set of individual sensors. The antenna assembly may incorporate magnitude scaling of sensors at fractions of the weight of a typical sensor suite. Further, there will be a reduction of associated cables from such multiple sensors, a reduction of cable connectors, and a reduction of associated routing hardware. These reductions may amount to a substantial operational savings for weight critical systems including aeronautical applications. Further, the reduction in the above mentioned items may also result in a reduction in the amount of required machining operations such as drilling, tapping, brackets, and fasteners, which may also result in a cost savings. The above described embodiments may also provide reliability benefits because reliability issues may be minimized due to the reduction in sensors, cables, and cable types, complex cable connectors, associated routing hardware. Further, that the system may use a single conditioning module may simplify input wiring schemes. The above described embodiments may also provide more reliable diagnostics as they may achieve a representation of the entire apparatus as opposed to typical sensor suites that may have only a single isolated discrete location.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A method of prognosing a health problem in an electrical, mechanical or electro-mechanical (12) apparatus based on at least a portion of radiation emitted by the apparatus, the method comprising:
a) at least partially enveloping (40) the apparatus in an antenna assembly (42);
b) establishing a profile for the apparatus (12) by detecting the radiation received from the antenna assembly (42) while the apparatus (12) is operating;
c) saving the profile for the apparatus;
d) repeating a-c across multiple apparatuses at multiple times to form a set of historical profiles for the multiple apparatuses; and
e) identifying at least one anomaly in the set of historical profiles that is indicative of a future failure.

2. The method of claim 1 wherein the apparatus (12) is fully enveloped (40) in the antenna assembly (42).

3. The method of either of claim 1 or 2, further comprising tuning the antenna assembly (42) to at least some radiation frequencies emitted by the apparatus (12).

4. The method of claim 3, wherein tuning the antenna assembly (42) comprises tuning the antenna assembly to frequencies known to be indicative of a health of the apparatus (12).

5. The method of claim 4, wherein tuning the antenna assembly (42) comprises selecting an antenna configured to receive the known frequencies.

6. The method of claim 5, wherein tuning the antenna assembly (42) comprises locating a selected antenna adjacent the apparatus where the known frequency is emitted.

7. The method of claim 1, wherein the multiple apparatuses share at least one common component.

8. The method of claim 7, wherein the multiple apparatuses are the same apparatus.

9. The method of any preceding claim, wherein the detecting the radiation received from the antenna assembly (42) comprises receiving the radiation received from a multi-frequency antenna forming the antenna assembly (42).

10. The method of any preceding claim, further comprising identifying a failure in the at least one apparatus (12) associated with the identified anomaly.

11. The method of claim 10 wherein the identified failure is used to identify the associated anomaly.

12. The method of either of claim 10 or 11, further comprising analyzing the historical profiles of each of the other apparatuses for the anomaly.

13. The method of claim 12, further comprising sending out an alert of a potential failure when the anomaly is detected in the historical profile.

14. The method of any preceding claim, wherein the profiles include baseline profiles that are recorded upon completion of the manufacturing for the apparatus (12) and before the apparatus (12) is put into service.

15. The method of claim 14 wherein the profiles include checkup profiles that are recorded after the corresponding baseline profile.
